# EUROPÄISCHE PATENTSCHRIFT

(11) **EP 2 613 462 B1**
(45) Veröffentlichungstag und Bekanntmachung des Hinweises auf die Patenterteilung: **06.09.2017**
(21) Anmeldenummer: 12006366.4
(22) Anmeldetag: 11.09.2012
(51) Int. Cl.: H04B 17/00

(54) **Verfahren zur Überwachung eines Transmitters und entsprechender Transmitter**
Method for monitoring a transmitter and corresponding transmitter
Procédé destiné à la surveillance d'un émetteur et émetteur correspondant

(30) Priorität: 09.01.2012 DE 102012000187
(43) Veröffentlichungstag der Anmeldung: 10.07.2013
(73) Patentinhaber: KROHNE Messtechnik GmbH, 47058 Duisburg (DE)
(72) Erfinder: Pichot, Vincent, 26100 Romans sur Isère (FR)
(74) Vertreter: Gesthuysen Patent- und Rechtsanwälte

(56) Entgegenhaltungen:
- US-A1- 2005 113 942
- US-A1- 2008 211 660

## Beschreibung

Die Erfindung betrifft ein Verfahren zur Überwachung eines Transmitters. Der Transmitter umfasst mindestens eine Messeinheit und eine Übertragungseinheit. Die Messeinheit und die Übertragungseinheit sind zumindest zur Übertragung von Signalen miteinander verbunden. Weiterhin besteht mindestens eine Verbindungsleitung zur Energieversorgung der Messeinheit, die dazu dient, mindestens eine Messgröße zu ermitteln und ein davon abhängiges Messsignal zu erzeugen. Die Übertragungseinheit empfängt von der Messeinheit das Messsignal und dient dazu, ausgehend von dem Messsignal ein Ausgangssignal an mindestens ein Signalübertragungselement zu übergeben. Die Erfindung betrifft ferner einen entsprechenden Transmitter.

Transmitter - alternative Bezeichnungen sind Messumformer oder Feldgeräte - der vorgenannten Art sind seit längerem bekannt und dienen ganz allgemein dazu, das von einer Sensoreinheit oder einem Sensorelement stammende primäre Sensorsignal zu erfassen und in ein - meist standardisiertes - Signal als elektrisches Ausgangssignal umzusetzen, damit es beispielsweise von einer übergeordneten Prozessüberwachungs- oder -steuerungseinheit verwendet werden kann. Der Begriff Transmitter ist hier nicht in irgendeiner Weise einschränkend zu verstehen. Die Sensoreinheit kann insbesondere der Messung von physikalischen oder chemischen Messgrößen dienen, z. B. Durchfluss, Massedurchfluss, Druck, Temperatur, Füllstand, pH-Wert usw.

Ein solcher Transmitter lässt sich für die allgemeine Betrachtung zumindest in zwei Teile gliedern: in eine Messeinheit, die der Messung an sich dient und die ein sich aus der Messung ergebendes Messsignal zur Verfügung stellt, und in eine Übertragungseinheit, die das Messsignal empfängt und z. B. über einen Feldbus an eine übergeordnete Einheit übermittelt. Ein Teil des Transmitters erfüllt die Aufgabe der eigentlichen Messung und der andere Teil des Transmitters kommuniziert den bei der Messung gewonnen Messwert oder ggf. die gewonnenen Messwerte an weitere Einheiten.

Die Übertragung erfolgt dabei über ein beliebiges Signalübertragungselement, bei dem es sich beispielsweise um eine Schnittstelle eines Feldbusses oder eine Zweileiter-Anschlussstelle oder eine beliebige Art eines Feldbusses selbst oder ein beliebiges Kommunikations- bzw. Leitungselement für ein z. B. 4...20 mA-Signal handelt. In einem Beispiel handelt es sich um einen elektrischen Leiter. Es kann sich beispielsweise auch um eine drahtlose Funkverbindung handeln.

Je nach Anwendungsfall müssen die Transmitter unterschiedlichen Sicherheitsanforderungen genügen. So müssen insbesondere mögliche Fehlerquellen erkannt und ggf. Sicherheitsmaßnahmen vorgesehen werden. Für Fehler kritische Bereiche sind beispielsweise die Messung selbst, die Signal- bzw. Datenverarbeitung im Transmitter und auch die Kommunikation mit z. B. dem Transmitter übergeordneten Einheiten. Um den jeweiligen Sicherheitsanforderungen, beispielsweise dem insbesondere in der Prozessautomatisierung wichtigen SIL (Safety Integrity Level)-Standard zu genügen, muss beispielsweise Redundanz oder Diversität bei den Transmittern vorgesehen sein. Redundanz bedeutet dabei eine doppelte oder mehrfache Auslegung von sicherheitsrelevanten Komponenten. Diversität bedeutet, dass die verwendeten Hardware-Komponenten bzw. Software-Programme von unterschiedlichen Herstellern stammen bzw. von unterschiedlichem Typ sind. Sowohl redundante als auch diversitäre Ausgestaltungen sind meist umständlich und/oder kostenintensiv.

Beispielsweise offenbart die Schrift EP 1 466 308 B1 eine Sensoranordnung mit einem Messaufnehmer, der ein Rohsignal erzeugt, und mit einer Ausgangsstufe, welche ein Ausgangssignal ausgibt. Dabei findet zwischen dem Messaufnehmer und der Ausgangsstufe eine Übertragung und Umwandlung des Rohsignals in das Ausgangssignal statt. Eine zusätzliche Überwachungseinheit erzeugt aus dem Rohsignal ein Hilfssignal und vergleicht dieses mit dem Ausgangssignal, um Abweichungen über einen vorbestimmten Rahmen hinaus zu signalisieren. Nachteilig ist daran, dass eine zweite Einheit zum Verarbeiten des Rohsignals vorgesehen sein muss. Gleichzeitig wird so nur der Signalweg innerhalb des Transmitters überwacht.

Die Patentschrift US 6,017,143 beschreibt einen Transmitter mit einer Messeinheit und einer Ein-/Ausgabeeinheit zur Verbindung mit einer Prozessschleife. Weiterhin ist ein Mikroprozessor vorgesehen, der mit einer Speichereinheit verbunden ist. In der Speichereinheit sind eingelernte oder eingegebene Daten und Regeln hinterlegt. Der Mikroprozessor ist derartig ausgestaltet, dass er ausgehend von den hinterlegten Daten und den Messsignalen Fehler erkennt und signalisiert.

Der Offenlegungsschrift EP 2 219 013 A1 lässt sich eine Schaltung entnehmen, über die bei einem Messgerät überprüft werden kann, ob ein eingestellter Messstrom einem Sollwert entspricht.

Die Offenlegungsschrift US 2005/0189017 A1 offenbart einen Drucksensor, der die Messsignale auf Fehler überprüft und das Vorliegen eines Fehlers signalisiert. Die Offenlegungsschrift US2008/0211660 A1 offenbart ein Feldgeräte-System, wobei ein Messgerät über einen Schalter mit einem Verbindungsgerät verbunden ist. Eine für die Beurteilung eines Transmitters in Hinblick auf die Sicherheit relevante Größe ist die Safe Failure Fraction (SFF), die aussagt, wie groß der Anteil der ungefährlichen Fehler an den insgesamt möglichen Fehlern ist. Ein ungefährlicher Fehler ist dabei ein Fehler, der zwar für die Sicherheit relevant ist, der jedoch entweder erkannt wird oder den Transmitter in einen sicheren Zustand überführt. Eine Problematik liegt daher im Erkennen des Vorliegens eines Fehlers oder eines Fehlerzustands. Eine weitere Problematik ist das sichere und möglichst einfache Kommunizieren des erkannten Fehlers bzw. des Versetzens des Transmitters in einen sicheren Zustand.

Der Erfindung liegt daher die Aufgabe zugrunde, ein Verfahren zur Überwachung eines Transmitters - und einen entsprechenden Transmitter - anzugeben, das eine sichere und möglichst einfache Anzeige eines Fehlers bzw. das Versetzen des Transmitters in einen gesicherten Zustand erlaubt.

Das erfindungsgemäße Verfahren, bei dem die zuvor hergeleitete und aufgezeigte Aufgabe gelöst ist, ist zunächst und im Wesentlichen durch folgenden Schritt gekennzeichnet: In dem Fall, dass von der Messeinheit das Vorliegen eines Fehlerzustands erkannt wird, wird von der Messeinheit auf die Verbindungsleitung, die der Energieversorgung der Messeinheit dient, eingewirkt. Beim erfindungsgemäßen Verfahren wird auf eine klassische Datenkommunikation zum Anzeigen eines Fehlers verzichtet, indem auf die Energieversorgung zugegriffen wird. Die Überwachung der elektrischen Energie bezogen auf die benötige Spannung oder Stromstärke ist bei vielen Geräten, ob Sensoren oder Aktoren, weit verbreitet und üblich. Daher setzt hier die Erfindung an und nutzt dies aus, um den Fehler anzuzeigen bzw. um den Transmitter im Fall des Vorliegens eines Fehlers in einen gesicherten Zustand zu versetzen. Die Messeinheit ist dabei in einer Variante über die Übertragungseinheit mit der Verbindungsleitung verbunden und ist in einer alternativen Ausgestaltung direkt mit dem Außenbereich des Transmitters in Verbindung. Die Fehlersignalisierung erfolgt daher entsprechend zunächst intern im Transmitter oder direkt mit der Umgebung des Transmitters.

Durch die Einwirkung der Messeinheit auf die Verbindungsleitung wird in einer Ausgestaltung die Übertragungseinheit und damit in Folge vorzugsweise auch der Transmitter in einen vorgebbaren Zustand versetzt und/oder es wird an die Übertragungseinheit ein Fehlersignal übermittelt. Die Übertragungseinheit ist dabei allgemein eine Schnittstelle des Transmitters zur Umgebung.

Im Fall, dass von der Messeinheit kein Fehlerzustand erkannt wird, dass also eine Freiheit von einem Fehlerzustand besteht, wird in einer Ausgestaltung von der Messeinheit ein in Folge der Ermittlung der Messgröße erzeugtes Messsignal an die Übertragungseinheit übermittelt.

Eine Variante zum Anzeigen des Fehlers bzw. zum damit verbundenen Versetzens der Übertragungseinheit bzw. des Transmitters in einen gesicherten Zustand besteht darin, dass über die Verbindungsleitung ein Ladezustand des Transmitters so beeinflusst wird, dass eine Ladezustandsüberwachung einen Ladezustandsfehler detektiert. Verfügt der Transmitter beispielsweise über einen Energiespeicher, so wird dieser in einer Ausgestaltung im Fehlerfall entladen, was beispielsweise durch eine Überwachung der Spannung detektierbar ist. Das Entladen hat zudem den Vorteil, dass die gespeicherte Energie nicht mehr vorhanden ist, so dass der Transmitter sich in einem energieärmeren und daher sicheren Zustand befindet.

In einer Ausgestaltung wird von der Messeinheit auf die Verbindungsleitung derartig eingewirkt, dass ein von der Messeinheit abgegriffener Energiewert außerhalb eines vorgebbaren Bereichs liegt. Ist beispielsweise für die zur Verfügung stehende Spannung ein gewisser Bereich vorgegeben, so zeigt ein Spannungsbedarf außerhalb dieses Bereichs das Vorliegen eines Fehlers an. Entsprechendes gilt für den elektrischen Strom, dessen Bedarf von der Messeinheit ebenfalls alternativ eingestellt werden kann. Wird insbesondere der Energiebedarf erhöht, so entzieht die Messeinheit der Übertragungseinheit bzw. dem Transmitter Energie und zwingt die Übertragungseinheit bzw. den Transmitter in einen sicheren, d. h. energielosen oder zumindest energieärmeren Zustand relativ zum Normalbetrieb.

In einer alternativen oder ergänzenden Ausgestaltung wird von der Messeinheit auf die Verbindungsleitung derartig eingewirkt, dass die Verbindungsleitung unterbrochen wird. Dafür ist beispielsweise ein Schalter vorgesehen.

Die zuvor hergeleitete und aufgezeigte Aufgabe ist nach einer weiteren Lehre der Erfindung bei dem eingangs genannten, insbesondere sicherheitstechnischen oder sicherheitsrelevanten Transmitter dadurch gelöst, dass die Messeinheit derartig ausgestaltet ist, dass die Messeinheit in dem Fall, dass ein Fehlerzustand vorliegt, auf die Verbindungsleitung zur Übertragung von Energie einwirkt. Die Messeinheit ist zum Übertragen des Messsignals, das ausgehend von der eigentlichen Messung mit einem Sensorelement erzeugt wird, an die Übertragungseinheit ausgestaltet. Weiterhin erlaubt die Messeinheit die Erkennung des Vorliegens eines Fehlers im Transmitter oder im überwachten Prozess oder in der mit dem Transmitter verbundenen Geräteumgebung. Verbunden sind die Messeinheit und die Übertragungseinheit für die Übertragung von Daten und Energie, wobei die Verbindungsmodalitäten auch in einer Verbindung zusammenfallen können. Die Messeinheit zeigt im Fehlerfall den Fehler an und überträgt vorzugsweise im fehlerfreien Zustand den Messwert bzw. das erzeugte Messsignal. Für die Fehleranzeigt wirkt die Messeinheit auf die Verbindungsleitung zur Übertragung von Energie ein.

Die Messeinheit und die Übertragungseinheit des erfindungsgemäßen Transmitters erlauben vorzugsweise das Senden und Empfangen von elektrischen Signalen, Daten bzw. Energie. Dabei können bi- oder unidirektionale Verbindungen vorgesehen sein.

Handelt es sich bei dem Transmitter beispielsweise um ein Zwei-Leiter-Messgerät, so wird durch die Messeinheit am Signalausgang der Übertragungseinheit, d. h. an der Zwei-Leiter-Schnittstelle des Signalübertragungselements beispielsweise im Fehlerfall ein solcher Strom- und/oder Spannungsverlauf oder ein solcher Wert eingestellt, wie er außerhalb der im Normalfall auftretenden Verläufe bzw. Werte liegt.

In einer Ausgestaltung ist die Messeinheit derartig ausgestaltet, dass die Messeinheit über die Einwirkung auf die Verbindungsleitung die Übertragungseinheit in einen vorgebbaren Zustand versetzt und/oder an die Übertragungseinheit ein Fehlersignal übermittelt. Für die Einwirkung ist dabei in einer Ausgestaltung mindestens ein Schalter zum Öffnen und Schließen der Verbindungsleitung vorgesehen.

Die oben geschilderten Ausgestaltungen des erfindungsgemäßen Verfahrens können dabei auch in dem hier genannten erfindungsgemäßen Transmitter angewendet werden, d. h. die zum Verfahren gemachten Anmerkungen gelten hier entsprechend. Umgekehrt lassen sich auch die Ausgestaltungen des erfindungsgemäßen Transmitters beim Verfahren anwenden bzw. gelten auch die Anmerkungen entsprechend für die Realisierung im erfindungsgemäßen Verfahren.

Im Einzelnen gibt es eine Vielzahl von Möglichkeiten, das erfindungsgemäße Verfahren und den erfindungsgemäßen Transmitter auszugestalten und weiterzubilden. Dazu wird verwiesen einerseits auf die dem Patentanspruch 1 und dem Patentanspruch 7 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlich die funktionalen Wirkzusammenhägen anhand eines Blockschaltbilds verdeutlichende Darstellung eines erfindungsgemäßen Transmitters mit einem Anschluss an ein Signalübertragungselement,
- Fig. 2: eine schematische Darstellung eines weiteren Ausführungsbeispiels eines erfindungsgemäßen Transmitters mit einem Beispiel für das Versetzen der Übertragungseinheit in einen vorgebbaren Zustand im Fehlerfall und
- Fig. 3: eine schematische Darstellung eines zeitlichen Verlaufs eines Spannungssignals einer Übertragungseinheit des Anführungsbeispiels der Fig. 2.

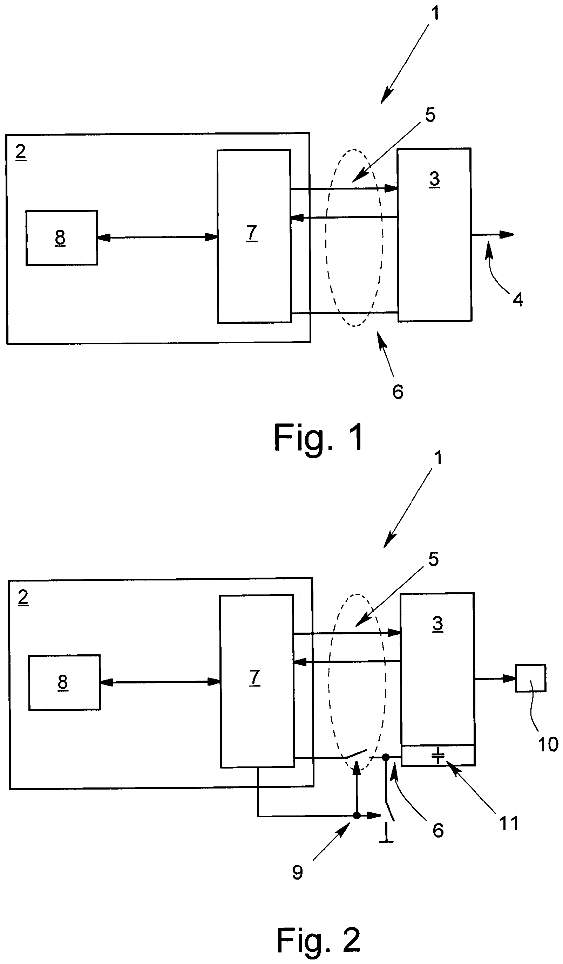

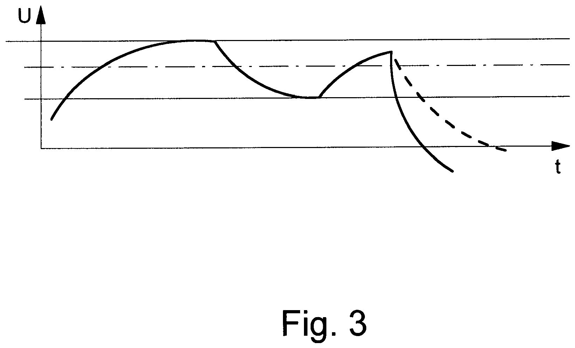

In den Fig. 1 und 2 sind verschiedene Ausführungsbeispiele eines Transmitters 1 dargestellt, wobei die Figuren keine Darstellungen im Sinne von korrekten elektrischen Schaltplänen sind, sondern vielmehr die Wirkzusammenhänge zwischen den verschiedenen Bestandteilen des Transmitters 1 erkennbar werden lassen sollen. Der in der Fig. 3 dargestellte Signalverlauf zeigt prinzipiell die möglichen Verläufe von Spannungssignalen, wie sie in Folge der Anwendung des erfindungsgemäßen Verfahrens bzw. bei einem erfindungsgemäßen Transmitter auftreten können.

Die Fig. 1 zeigt im Blockschaltbild einen erfindungsgemäßen Transmitter 1, der über eine Messeinheit 2 und eine Übertragungseinheit 3 verfügt. Ausgehend von einer Messung einer physikalischen und/oder chemischen Mess- oder Prozessgröße übermittelt die Messeinheit 2 ein Messsignal an die Übertragungseinheit 3, die das Messsignal in Form eines Ausgangssignals an ein Signalübertragungselement 4 übermittelt. Daher kann die Übertragungseinheit 3 auch als Konverter bezeichnet werden, der das Messsignal in ein z. B. busfähiges Ausgangssignal übersetzt oder konvertiert. Bei dem Signalübertragungselement 4 handelt es sich dabei beispielsweise um einen Teil eines Feldbusses oder um einen Zweileiter zur Anbindung beispielweise an eine - nicht dargestellte - übergeordnete Einheit. Alternativ kann es sich auch um eine kabellose Funkverbindung handeln. Die Übertragungseinheit 3 verfügt dabei mindestens über einen Signaleingang zum Empfangen des Messsignals von der Messeinheit 2 und über einen Signalausgang zur Ausgabe des Ausgangssignals.

Die Übertragungseinheit 3 und die Messeinheit 2 sind zum einen über eine Kommunikationsverbindung 5 für die Übertragung von Daten und zum anderen über eine Verbindungsleitung 6 zur Energieversorgung der Messeinheit 2 von der Übertragungseinheit 3 verbunden. Die Energieversorgung der Messeinheit 2 erfolgt im dargestellten Beispiel über die Übertragungseinheit 3 und ist dadurch insbesondere ein Beispiel für ein Zwei-Leiter-Messgerät, bei dem die Ausgabe von Werten über die Energieversorgung erfolgt.

Die Messeinheit 2 verfügt über eine Sende- und Empfangseinheit 7 für Signale und über eine Sensoreinheit 8 für die eigentliche Messung. Die Messeinheit 2 erzeugt ausgehend von der zu messenden Messgröße (z. B. Durchfluss, Druck, Füllstand, pH-Wert, elektrische Leitfähigkeit etc.) ein Rohsignal, das von der Sende- und Empfangseinheit 7 in das Messsignal (Strom- oder Spannungswert oder ein digitales Signal usw.) umgewandelt wird.

Die Messeinheit 2 ist derartig ausgestaltet, dass sie das Vorliegen eines Fehlerzustands bei der Messung, im Transmitter 1 selbst oder beispielsweise auch im zu überwachenden Prozess erkennt. Dies erfolgt beispielsweise dadurch, dass zusätzlich zur eigentlichen Messgröße eine weitere sekundäre Messgröße ermittelt und ausgewertet wird oder dass erkannt wird, dass das ermittelte Messsignal außerhalb eines zulässigen Bereichs liegt oder dass der Transmitter 1 auf das Signalübertragungselement 4 übertragene Messwerte rückliest und mit abgespeicherten Werten vergleicht.

Erkennt die Messeinheit 2, dass ein Fehlerzustand vorliegt, so signalisiert sie dies über eine Einwirkung auf die Verbindungsleitung 6, die der Energieversorgung der Messeinheit 2 dient. In einer Variante stellt die Messeinheit 2 dabei einen Energiebedarf ein, der außerhalb eines definierten Normalbereichs liegt. Liegt kein Fehler vor, so überträgt die Messeinheit 2 das Messsignal an die Übertragungseinheit 3, die ein entsprechendes Ausgangssignal auf das Signalübertragungselement 4 ausgibt.

In der Fig. 2 ist eine Umsetzung gezeigt, die es der Messeinheit 2 erlaubt, im Falle eines Fehlers die Übertragungseinheit 3 in einen abgesicherten Zustand zu versetzen. Für die Übersichtlichkeit sind gleiche Elemente mit den gleichen Bezugszeichen wie in der Fig. 1 versehen.

Die Übertragungseinheit 3 verfügt in dieser Ausgestaltung über einen Energiespeicher, welcher hier durch einen Kondensator 11 symbolisiert ist. Für das Versetzen in den vorgebbaren gesicherten Zustand ist die Messeinheit 2 mit einem Schalter 9 verbunden, der auf die Verbindungsleitung 6 einwirkt. Im Normalfall, d. h. im Zustand ohne Fehler, ist die Verbindungsleitung 6 geschlossen und die Übertragungseinheit 3 versorgt die Messeinheit 2 mit Energie. Wird ein Fehlerzustand erkannt, so öffnet der Schalter 9 die Verbindung zwischen der Übertragungseinheit 3 und Messeinheit 2 und verbindet den Kondensator 11 der Übertragungseinheit 3 mit Masse und entlädt ihn. Dadurch wird zum einen elektrische Energie von der Übertragungseinheit 3 abgezogen und zum anderen ergibt sich - wie anhand der Fig. 3 gezeigt wird - ein außerhalb des Transmitters 1 hier als Beispiel über eine Ladungsüberwachungseinheit 10 erkennbares Zeichen dafür, dass ein Fehler vorliegt.

Das Entladeverhalten des Kondensators 11 der Übertragungseinheit 3 der Fig. 2 für den Normal- bzw. den Fehlerfall zeigt schematisch die Fig. 3 mit einem zeitlicher Verlauf einer Spannung U. Zunächst findet sich - als ein Beispiel für den Normalfall als Abwesenheit von einem von der Messeinheit festgestellten Fehler - ein übliches Verhalten der Spannung an einem Kondensator beim Laden und Entladen. Daran schließt sich hier ein zweites Anwachsen der Spannung an, wobei das lokale Maximum der Spannung kleiner ist als beim ersten Ladevorgang. Gleichwohl würde das normale Abnehmen der Spannung - hier durch die gestrichelte Linie angedeutet - passend zum vorhergehenden Entladen stattfinden. D. h. die Konstanten für beide Entladevorgänge sind im Wesentlichen identisch, und eine z. B. dem Transmitter 1 nachgeordnete Ladungsüberwachungseinheit 10 detektiert anhand des Spannungsverlaufs nichts Auffälliges.

Die durchgezogene Linie entspricht dem Fall, dass ein Fehler vorliegt und dass die Messeinheit 2 derartig auf die Verbindungsleitung 6 eingewirkt hat, dass der als Beispiel genannte Kondensator 11 gegen Masse entladen wurde. Hieraus ergibt sich ein deutlich steileres Entladeverhalten.

## Patentansprüche

1. Verfahren zur Überwachung eines Transmitters (1), wobei der Transmitter (1) mindestens eine Messeinheit (2) und eine Übertragungseinheit (3) umfasst, wobei die Messeinheit (2) und die Übertragungseinheit (3) zumindest zur Übertragung von Signalen miteinander verbunden sind, wobei mindestens eine Verbindungsleitung (6) zur Energieversorgung der Messeinheit (2) besteht, wobei die Messeinheit (2) dazu dient, mindestens eine Messgröße zu ermitteln und ein davon abhängiges Messsignal zu erzeugen, wobei die Übertragungseinheit (3) von der Messeinheit (2) das Messsignal empfängt und dazu dient, ausgehend von dem Messsignal ein Ausgangssignal an mindestens ein Signalübertragungselement (4) zu übergeben, wobei in dem Fall, dass von der Messeinheit (2) das Vorliegen eines Fehlerzustands erkannt wird, von der Messeinheit (2) auf die Verbindungsleitung (6) eingewirkt wird, und wobei in dem Fall, dass von der Messeinheit (2) eine Freiheit von einem Fehlerzustand erkannt wird, ein von der Messeinheit (2) in Folge der Ermittlung der Messgröße erzeugtes Messsignal an die Übertragungseinheit (3) übermittelt wird,
**dadurch gekennzeichnet,**
**dass** in dem Fall, dass von der Messeinheit (2) das Vorliegen eines Fehlerzustands erkannt wird, von der Messeinheit (2) über die Einwirkung auf die Verbindungsleitung (6) die Übertragungseinheit (3) in einen vorgebbaren Zustand versetzt wird.

2. Verfahren nach Anspruch 1, **dadurch gekennzeichnet, dass** über die Verbindungsleitung (6) ein Ladezustand des Transmitters (1) so beeinflusst wird, dass eine Ladezustandsüberwachung einen Ladezustandsfehler detektiert.

3. Verfahren nach Anspruch 1 oder 2, **dadurch gekennzeichnet, dass** von der Messeinheit (2) auf die Verbindungsleitung (6) derartig eingewirkt wird, dass ein von der Messeinheit (2) abgegriffener Energiewert außerhalb eines vorgebbaren Bereichs liegt.

4. Verfahren nach Anspruch 1 oder 2, **dadurch gekennzeichnet, dass** von der Messeinheit (2) auf die Verbindungsleitung (6) derartig eingewirkt wird, dass die Verbindungsleitung (6) unterbrochen wird.

5. Transmitter (1), wobei der Transmitter (1) mindestens eine Messeinheit (2) und eine Übertragungseinheit (3) umfasst, wobei die Messeinheit (2) und die Übertragungseinheit (3) zumindest zur Übertragung von Signalen miteinander verbunden sind, wobei die Messeinheit (2) dazu dient, mindestens eine Messgröße zu ermitteln und ein davon abhängiges Messsignal zu erzeugen, wobei die Übertragungseinheit (3) von der Messeinheit (2) das Messsignal empfängt und dazu dient, ausgehend von dem Messsignal ein Ausgangssignal an mindestens ein Signalübertragungselement (4) zu übergeben, wobei die Übertragungseinheit (3) zum Übertragen von elektrischen Ausgangssignalen an das Signalübertragungselement (4) ausgestaltet ist, wobei mindestens eine Verbindungsleitung (6) zur Übertragung von Energie zur Messeinheit (2) besteht, und wobei die Messeinheit (2) derartig ausgestaltet ist, dass die Messeinheit (2) in dem Fall, dass ein Fehlerzustand vorliegt, auf die Verbindungsleitung (6) zur Übertragung von Energie einwirkt,
**dadurch gekennzeichnet,**
**dass** die Messeinheit (2) derartig ausgestaltet ist, dass die Messeinheit (2) über die Einwirkung auf die Verbindungsleitung (6) die Übertragungseinheit (3) in einen vorgebbaren Zustand versetzt.

6. Transmitter (1) nach Anspruch 5, **dadurch gekennzeichnet, dass** mindestens ein Schalter (9) zum Öffnen und Schließen der Verbindungsleitung (6) vorgesehen ist.

## Claims

1. Method for monitoring a transmitter (1), wherein the transmitter comprises at least one measurement unit (2) and one transmission unit (3), wherein the measurement unit (2) and the transmission unit (3) are interconnected at least for transmission of signals, wherein there is at least one connecting line (6) for power supply to the measurement unit (2), wherein the measurement unit (2) is used to determine at least one measurement quantity and to produce a measurement signal which is dependent on it, wherein the transmission unit (3) receives the measurement signal from the measurement unit (2) and is used to transfer an output signal to at least one signal transmission element (4) based on the measurement signal, wherein, in the case that the presence of an error state is recognized by the measurement unit (2), the connecting line (6) is influenced by the measurement unit (2), and wherein in the case that an absence of an error state is recognized by the measurement unit (2), a measurement signal generated by the measurement unit (2) as a result of determining at least one measurement quantity is transferred to the transmission unit (3)
**characterized in,**
**that** in that case that the presence of an error state is recognized by the measurement unit (2), the transmission unit (3) is set into a definable state by the measurement unit (2) by influencing the connecting line (6).

2. Method according to claim 1, **characterized in that** a charging state of the transmitter (1) is influenced via the connecting line (6) in such a manner that charging state monitoring detects a charging state error.

3. Method according to claim 1 or 2, **characterized in that** the measurement unit (2) influences the connecting line in such a manner that an energy value tapped from the measurement unit (2) lies outside a definable region.

4. Method according to claim 1 or 2, **characterized in that** the measurement unit (2) influences the connecting line (6) in such a manner that the connecting line (6) is interrupted.

5. Transmitter (1), wherein the transmitter (1) comprises at least one measurement unit (2) and one transmission unit (3), wherein the measurement unit (2) and the transmission unit (3) are connected to one another at least for the transmission of signals, wherein the measurement unit (2) is used for determining at least one measurement quantity and for producing a measurement signal dependent upon the at least one measurement quantity, wherein the transmission unit (3) receives the measurement signal from the measurement unit (2) and is used for transmitting an output signal based on the measurement signal to at least one signal transmission element (4), wherein the transmission unit (3) is designed for the transmission of electric output signals to the signal transmission element (4), wherein there is at least one connecting line (6) for power supply to the measurement unit (2), and wherein the measurement unit (2) is designed in such a manner that the measurement unit (2) influences the connecting line (6) for transmission of power in the case that an error state is found to exist
**characterized in**
the measurement unit (2) is designed in such a manner that the measurement unit (2) sets the transmission unit (3) into a definable state by influencing the connecting line (6).

6. Transmitter (1) according to claim 5, **characterized in that** at least one switch (9) is provided for opening and closing the connecting line (6).

## Revendications

1. Procédé destiné à la surveillance d'un émetteur (1), dans lequel l'émetteur (1) comprend au moins une unité de mesure (2) et une unité de transmission (3), dans lequel l'unité de mesure (2) et l'unité de transmission (3) sont reliées l'une à l'autre pour au moins transmettre des signaux, dans lequel il est prévu au moins une ligne de connexion (6) pour l'alimentation en énergie de l'unité de mesure (2), dans lequel l'unité de mesure (2) est utilisée pour déterminer au moins une grandeur de mesure et pour générer un signal de mesure dépendant de celle-ci, dans lequel l'unité de transmission (3) reçoit le signal de mesure en provenance de l'unité de mesure (2) et est utilisée pour délivrer un signal de sortie à partir du signal de mesure à au moins un élément de transmission de signaux (4), dans lequel, dans le cas où la présence d'un état d'erreur est détectée par l'unité de mesure (2), l'unité de mesure (2) agit sur la ligne de connexion (6), et dans lequel, dans le cas où une absence d'état d'erreur est détectée par l'unité de mesure (2), un signal de mesure généré consécutivement à la détermination de la grandeur de mesure est transmis par l'unité de mesure (2) à l'unité de transmission (3),
**caractérisé en ce que**, dans le cas où la présence d'un état d'erreur est détectée par l'unité de mesure (2), l'unité de transmission (3) est amenée à passer par l'unité de mesure (2) dans un état pouvant être prédéterminé par l'intermédiaire de l'action effectuée sur la ligne de connexion (6).

2. Procédé selon la revendication 1,
**caractérisée en ce qu'**un état de charge de l'émetteur (1) est soumis à une action par l'intermédiaire de la ligne de connexion (6) de manière à ce qu'une surveillance de l'état de charge détecte une erreur d'état de charge.

3. Procédé selon la revendication 1 ou 2,
**caractérisé en ce qu'**une action est exercée sur la ligne de connexion (6) par l'unité de mesure (2) de manière à ce qu'une valeur d'énergie prélevée par l'unité de mesure (2) se situe à l'extérieur d'une plage pouvant être prédéterminée.

4. Procédé selon la revendication 1 ou 2,
**caractérisé en ce qu'**une action est exercée sur la ligne de connexion (6) par l'unité de mesure (2) de manière à interrompre la ligne de connexion (6).

5. Émetteur (1), dans lequel l'émetteur (1) comprend au moins une unité de mesure (2) et une unité de transmission (3), dans lequel l'unité de mesure (2) et l'unité de transmission (3) sont reliées l'une à l'autre pour au moins transmettre des signaux, dans lequel l'unité de mesure (2) est utilisée pour déterminer au moins une grandeur de mesure et pour générer un signal de mesure dépendant de celle-ci, dans lequel l'unité de transmission (3) reçoit le signal de mesure en provenance de l'unité de mesure (2) et est utilisée pour délivrer un signal de sortie à partir du signal de mesure à au moins un élément de transmission de signaux (4), dans lequel l'unité de transmission (3) est configurée pour transmettre des signaux de sortie électriques à l'élément de transmission de signaux (4), dans lequel il est prévu au moins une ligne de connexion (6) pour transmettre de l'énergie à l'unité de mesure (2), et dans lequel l'unité de mesure (2) est configurée de manière à ce que l'unité de mesure (2), dans le cas où un état d'erreur est présent, agir sur la ligne de connexion (6) pour la transmission d'énergie,
**caractérisé en ce que** l'unité de mesure (2) est configurée pour faire passer l'unité de transmission (3) dans un état pouvant être prédéterminé par l'intermédiaire de l'action exercée sur la ligne de connexion (6).

6. Émetteur (1) selon la revendication 5,
**caractérisé en ce qu'**il est prévu au moins un commutateur (9) destiné à ouvrir et fermer la ligne de connexion (6).
